# EUROPÄISCHE PATENTANMELDUNG

(11) **EP 3 933 600 A1**
(43) Veröffentlichungstag der Anmeldung: **05.01.2022**
(21) Anmeldenummer: 20183698.8
(22) Anmeldetag: 02.07.2020
(51) Int. Cl.: G06F 11/36

(54) **VERFAHREN ZUR AUTOMATISIERTEN DURCHFUEHRUNG VON SOFTWARETESTS AN GRAFISCHEN BENUTZEROBERFLAECHEN SOWIE VORRICHTUNG ZUR DURCHFUEHRUNG EINES SOLCHEN VERFAHRENS**

(71) Anmelder: Thales Management & Services Deutschland GmbH, 71254 Ditzingen (DE)
(72) Erfinder: ACUNA-BLANCO, Nestor, 70372 Stuttgart (DE)
(74) Vertreter: Kohler Schmid Möbus Patentanwälte

(57) **Zusammenfassung**

Die Erfindung betrifft ein Verfahren zur Durchführung von automatisierten Softwaretests (44a, 44b) für eine grafische Benutzerschnittstelle (10), wobei der Softwaretest (44a, 44b) einen aktuellen Testzustand (48a, 48b; 48a', 48b') und mindestens einen auf den aktuellen Testzustand folgenden nachfolgenden Testzustand (50a, 50b; 50a', 50b') umfasst und von einer Steuereinheit (42) gesteuert wird, wobei in einem ersten Verfahrensschritt eine digitale Abbildung (26; 26') einer grafischen Ausgabe einer Recheneinheit (12) oder einer Anzeige (14) der grafischen Benutzerschnittstelle (10) bereitgestellt wird; in einem zweiten Verfahrensschritt die bereitgestellte digitale Abbildung (26; 26') durch Bestimmen charakteristischer Abbildungs-Segmente (44a-d) in der digitalen Abbildung (26; 26') mittels einer Bildklassifizierungs-Routine (32) einer Auswertungseinheit (30) ausgewertet wird; und in einem dritten Verfahrensschritt der aktuelle Testzustand (48a, 48b; 48a', 48b') auf Grundlage der von der Auswertungseinheit (30) aus der digitalen Abbildung (26; 26') bestimmten Abbildungs-Segmente (44a-d) in den nachfolgenden Testzustand (50a, 50b; 50a', 50b') versetzt wird.

Die Erfindung betrifft weiterhin ein Softwaretestsystem (1) zur Ausführung eines Verfahrens zur Durchführung von automatisierten Softwaretests (44a, 44b).

## Beschreibung

### Hintergrund der Erfindung

Die Erfindung betrifft ein Verfahren zur Durchführung von Softwaretests für eine grafische Benutzerschnittstelle, wobei der Softwaretest einen aktuellen Testzustand und mindestens einen dem aktuellen Testzustand nachfolgenden Testzustand umfasst, von einer Steuereinheit gesteuert wird und die Verfahrensschritte:
A) Bereitstellen einer digitalen Abbildung einer grafischen Ausgabe einer Recheneinheit der grafischen Benutzerschnittstelle im aktuellen Testzustand des Softwaretests;
B) Auswertung der bereitgestellten digitalen Abbildung durch Bestimmen charakteristischer Abbildungs-Segmente in der digitalen Abbildung durch eine Auswertungseinheit; sowie
C) Ändern des aktuellen Testzustands in einen nachfolgenden Testzustand auf Grundlage der von der Auswertungseinheit aus der digitalen Abbildung bestimmten Abbildungs-Segmente; aufweist. Die Erfindung betrifft weiterhin ein Softwaretestsystem zur Ausführung eines Verfahrens zur Durchführung von Softwaretests.

Grafische Benutzerschnittstellen dienen der Interaktion zwischen Benutzer und Maschine und weisen einen Computer zur Ausführung einer Betriebssoftware, ein Eingabemittel und eine grafische Anzeige auf. Softwaretests für die Betriebssoftware der grafischen Benutzerschnittstellen sind aus dem Stand der Technik hinlänglich bekannt geworden und werden zur Überprüfung der Softwarefunktionen sowie der Erkennung von Fehlern in der Software verwendet. Im Mittelpunkt des Softwaretests steht dabei die grafische Ausgabe der Benutzerschnittstellen, die zu bestimmten Zeitpunkten bzw. nach bestimmten Eingaben an die grafische Benutzerschnittstelle - bei einer korrekten Funktion der Software - bestimmte grafische Merkmale aufzuweisen hat.

Zur Durchführung von Softwaretests an Software mit umfangreichen Funktionen sowie der schnellen Durchführung von Softwaretests während der Dauer der Softwareentwicklung werden automatisiert durchführbare Softwaretests verwendet. Eine Aufzählung sowie der Vergleich der verschiedenen aus dem Stand der Technik bekannten Softwaretests geht aus [1] hervor. Die aus [1] bekannten automatisierte Softwaretests erfordern dabei jedoch die Manipulation, bzw. das Einbringen von zusätzlichen Code-Sequenzen in den Softwarecode der zu testenden Software, um valide Informationen über den Zustand sowie den ein- und ausgehenden Datenverkehr der zu testenden Software zu erhalten. Das Einbringen von Codesequenzen bei derartigen automatisierten Softwaretests ist jedoch von der verwendeten Programmiersprache der zu testenden Software abhängig. Ein bereits bestehender Softwaretest muss daher gegebenenfalls zunächst aufwendig hinsichtlich seiner Kompatibilität mit der zu testenden Software abgeändert werden. Im widrigsten Fall muss ein komplett neuer Softwaretest erstellt bzw. programmiert werden.

Die Manipulation der zu testenden Software - wenn auch nur während der Durchführung des Tests - stellt in Anwendungsbereichen mit hoher Sicherheitsrelevanz, beispielsweise bei Softwareeinsätzen im Bahnverkehr mit SIL-4-Voraussetzung, jedoch einen Verstoß gegen die Sicherheitsbestimmungen dar und führt zur Abweisung einer entsprechenden Sicherheitsfreigabe.

Herkömmliche Softwaretests an Software für grafische Benutzerschnittstellen mit hohen Sicherheitsanforderungen werden daher von Testpersonen nach Vorgabe einer Testprozedur manuell bzw. nicht-automatisiert mittels Bedienung der grafischen Benutzerschnittstelle durchgeführt. Derart durchgeführte Softwaretests sind jedoch langwierig und entsprechend kostenaufwendig.

### Aufgabe der Erfindung

Es ist Aufgabe der Erfindung, Softwaretests ohne Eingriff in den zu testenden Softwarecode automatisiert durchzuführen und dabei größtmögliche Kompatibilität in Bezug auf verschiedenste Programmiersprachen der zu testenden Software zu ermöglichen.

### Beschreibung der Erfindung

Diese Aufgabe wird erfindungsgemäß gelöst durch ein Verfahren gemäß Patentanspruch 1 sowie eine Vorrichtung gemäß Patentanspruch 11.

Die Aufgabe wird somit durch ein Verfahren der eingangs genannten Art gelöst, dadurch gekennzeichnet, dass der Softwaretest automatisiert durchgeführt wird und die charakteristischen Abbildungs-Segmente mittels einer Abbildungs-Segmentierungs-Routine zur Bildklassifizierung bestimmt werden.

Der Softwaretest wird von einer Steuereinheit ausgeführt, bzw. gesteuert. Der Softwaretest weist mehrere Testzustände, also zumindest einen aktuellen Testzustand und zumindest einen auf den aktuellen Testzustand folgenden (nachfolgenden) Testzustand auf. Unter einem aktuellen Testzustand ist erfindungsgemäß ein momentan durch den Softwaretest eingenommener Testzustand zu verstehen. Ein nachfolgender Testzustand ist als ein auf den aktuellen Testzustand unmittelbar folgender Testzustand zu verstehen.

Der Softwaretest umfasst einen vordefinierten Testablauf mit den mehreren, jedoch zumindest zwei, insbesondere zumindest zehn, besonders bevorzugt zumindest fünfzig, Testzuständen, wobei für den Übergang von einem Testzustand (aktuellen Testzustand) in einen nächsten Testzustand (nachfolgender Testzustand) bestimmte Bedingungen erfüllt sein müssen. Solange diese Bedingungen nicht erfüllt sind, verharrt der Softwaretest in dem aktuellen Testzustand. Mit anderen Worten verharrt der Softwaretest so lange in dem aktuellen Testzustand, bis die Bedingungen für eine Zustandsänderung erfüllt sind.

Ein aktueller Testzustand kann als Anfangszustand des Softwaretests ausgebildet sein. Der Anfangszustand kann Bedingungen aufweisen, deren Erfüllung zur Durchführung des Softwaretests erforderlich sind. Mehrere Softwaretests können den gleichen, insbesondere denselben, Anfangszustand aufweisen.

Der aktuelle Testzustand kann mehrere Bedingungen, insbesondere charakteristische Abbildungs-Segmente, bzw. mehrere Kombinationen von Bedingungen für Zustandsänderungen in mehrere mögliche, dem aktuellen Testzustand nachfolgende Testzustände aufweisen.

Ein Testzustand ist charakterisiert durch seine charakteristischen Abbildungs-Segmente.

Charakteristische Abbildungs-Segmente sind diejenigen Teilabbildungen der digitalen Abbildung, die einen der Testzustände des Softwaretests charakterisieren. Die charakteristischen Abbildungs-Segmente werden für jeden Testzustand vorab bestimmt.

Während die charakteristischen Abbildungs-Segmente des aktuellen Testzustands Rückschlüsse auf die bereits aufgetretenen Abbildungs-Segmente zulassen, begründen die charakteristischen Abbildungs-Segmente des nachfolgenden Testzustands die Bedingungen für eine entsprechende Zustandsänderung, bzw. zum Wechsel in diesen Testzustand.

Eine Zustandsänderung des Softwaretests kann das Auftreten von mehreren verschiedenen und/oder gleichen charakteristischen Abbildungs-Segmenten bedingen. Darüber hinaus kann eine Zustandsänderung das zeitgleiche und/oder zeitversetzte Auftreten von charakteristischen Abbildungs-Segmenten bedingen. Mehrere aufeinanderfolgende Testzustände des Softwaretests können identische oder ähnliche Bedingungen hinsichtlich eines oder mehrerer zu erwartender charakteristischer Abbildungs-Segmente aufweisen.
Mit anderen Worten sind Testzustände Verharrungsphasen des Softwaretests, in denen das Auftreten von zumindest einem charakteristischen Abbildungs-Segment in der digitalen Abbildung der grafischen Benutzerschnittstelle erwartet wird.

Wenn alle Bedingungen für eine Zustandsänderung erfüllt, insbesondere alle erforderlichen charakteristischen Abbildungs-Segmente ermittelt, sind, wird der Softwaretest in den nächsten Testzustand versetzt und die Schritte A) bis C) werden wiederholt. Die Schritte A) bis C) werden vorzugsweise so oft wiederholt, bis ein End-Testzustand erreicht wird.

Der End-Testzustand beendet den Softwaretest und weist keinen nachfolgenden Testzustand und mithin keine Bedingungen für eine Zustandsänderung auf. Der End-Testzustand wird erreicht, wenn alle Testzustände des Softwaretests planmäßig durchlaufen wurden oder vorher ein vom geplanten Testablauf abweichendes Ereignis zu einer entsprechenden Zustandsänderung führt. End-Testzustände sind vordefinierte Testzustände des Softwaretests, die auch dann eintreten können, wenn der Softwaretest unplanmäßig verläuft. Ein vom geplanten Testablauf abweichendes Ereignis kann dabei in einem Auftreten oder Nicht-Auftreten eines charakteristischen Abbildungs-Segments innerhalb eines vorgegebenen Zeitraums bestehen. Beispielsweise kann das Auftreten eines charakteristischen Abbildungs-Segments in Form einer Fehlermeldung in jedem Testzustand (mit Ausnahme von End-Testzuständen) des Softwaretests zu einem End-Testzustand führen, der Rückschluss auf einen fehlgeschlagenen Softwaretest zulässt. Weiterhin beispielsweise kann vorgesehen sein, dass das Nicht-Auftreten eines zu ermittelnden charakteristischen Abbildungs-Segments innerhalb eines vorgegebenen Zeitraums die Bedingung für eine Zustandsänderung in einen nachfolgenden End-Testzustand mit Rückschluss auf einen fehlgeschlagenen Softwaretest erfüllt.

Der End-Testzustand, kann daher in einem erfolgreichen oder fehlgeschlagenen Softwaretestergebnis liegen.
Weiterhin können Bedingungen für eine Zustandsänderung in den nachfolgenden Testzustand, insbesondere das Auffinden charakteristischer Abbildungs-Segmente, mithin einem zeitlichen Ablauf unterliegen, wobei der zeitliche Ablauf der Bedingung zugleich die Bedingung für eine Zustandsänderung in einen End-Testzustand begründen kann. Der End-Testzustand lässt besonders bevorzugt einen Rückschluss durch den Bediener auf einen erfolgreichen oder fehlgeschlagenen Softwaretest zu.

Zusätzlich zum Auffinden der charakteristischen Abbildungs-Segmente kann eine Zustandsänderung weitere Bedingungen aufweisen. Beispielsweise, jedoch nicht abschließend, können Anweisungen oder Eingaben an die grafische Benutzerschnittstelle, Anweisungen an die Auswertungseinheit hinsichtlich zu ermittelnder charakteristischer Abbildungs-Segmente, usw. Bedingungen für eine Zustandsänderung sein.

Eine Anweisung oder Eingabe an die grafische Benutzerschnittstelle kann zu einer Änderung der digitalen Abbildung führen.

Insbesondere lässt der End-Testzustand einen Rückschluss auf einen erfolgreich abgeschlossenen Softwaretest am Ende mehrerer aufeinanderfolgender Testzustände zu, wobei jeder Testzustand mögliche Zustandsänderungen aufweist, die, bei Erfüllen der jeweiligen Bedingungen, eine Änderung in den nachfolgenden Testzustand sowie in einen End-Testzustand mit Rückschluss auf einen fehlgeschlagenen Softwaretest zulassen.

Die Ausführung des Softwaretests erfolgt automatisiert gemäß den vordefinierten Bedingungen. Der Softwaretest läuft autonom, d.h. dass die Steuereinheit den momentanen Testzustand des Softwaretests selbständig ermittelt und eintretende Bedingungen, insbesondere das Auftreten charakteristischer Abbildungs-Segmente, für eine Zustandsänderung erfasst.

Unter einer digitalen Abbildung werden eine oder mehrere computergenerierte und computerlesbare Informationen verstanden, die zur Erstellung einer computergenerierten grafischen Abbildung benötigt werden. Die Darstellung der digitalen Abbildung auf einer Anzeige ist dabei für eine Verarbeitung keine Voraussetzung. Mit anderen Worten umfasst die digitale Abbildung Informationen eines darzustellenden Bildes und kann mit geeigneten Anzeigegeräten, insbesondere Computermonitoren, Projektoren, virtuellen Displays und/oder Druckern, visualisiert werden. Eine digitale Abbildung enthält dabei einen endlichen Umfang der zur Erstellung einer grafischen Abbildung durch einen nachgelagerten Rechenprozess benötigten Informationen. Beispielsweise besteht auch ein Video-Stream aus einer Vielzahl von digitalen Abbildungen, die nacheinander verarbeitet werden und auf einer geeigneten Anzeige zu einer computergenerierten grafischen Abbildung führen.

Unter einer grafischen Abbildung wird eine durch den Menschen visuell bzw. optisch erfassbare und in ihrer Ausdehnung begrenzte Darstellung von Informationen verstanden. Die grafische Abbildung ist somit die für den Menschen visuell erfassbare Darstellung der in der digitalen Abbildung enthaltenen Informationen. Mithin sind die auf einer Anzeige visualisierbaren grafischen Abbildungs-Segmente in gewandelter Form in der digitalen Abbildung enthalten. Mit anderen Worten unterscheidet sich die grafische Abbildung von der digitalen Abbildung lediglich durch das Datenformat bzw. den Abgriffspunkt der Abbildung zwischen computerbasierter Bildgenerierung und der visuellen Darstellung, jedoch nicht durch den Informationsgehalt.

Die digitale Abbildung und die grafische Abbildung weisen ein oder mehrere Abbildungs-Segmente auf. Abbildungs-Segmente umfassen vorzugsweise einen oder mehrere Abbildungsbereiche. Ein Abbildungsbereich weist vorzugsweise einen zusammenhängenden Informationsgehalt auf. Unter einem zusammenhängenden Informationsgehalt sind beispielsweise aber nicht abschließend Zusammenhänge in Form, Muster, Farbe, Schriftart, Sinn, Botschaft, Symbol und/oder Textur zu verstehen. Mit anderen Worten sind Abbildungs-Segmente aus der Gesamtheit der Abbildung aufgrund des segmenteigenen Informationsgehalts von dem Rest der Abbildung unterscheidbar. Mögliche Abbildungs-Segmente können dabei beispielsweise farblich abgesetzte Pixel, Schriftzeichen, Wörter, Sätze, geometrische Formen, oder dergleichen umfassen.

Die Ermittlung, ob charakteristischen Abbildungs-Segmente in der grafischen Abbildung vorhanden sind, erfolgt mittels zumindest einer Abbildungs-Segmentierungs-Routine.

Hierfür weist das erfindungsgemäße Softwaretestverfahren zumindest eine, insbesondere mehrere, Abbildungs-Segmentierungs-Routinen zur Segmentierung von voneinander abgrenzbaren Teilen eines der Abbildungs-Segmentierungs-Routine bereitgestellten Datensatzes in Form der bereitgestellten digitalen Abbildung(en) auf (Bildklassifizierung). Der Datensatz kann hierzu eine Vielzahl computerlesbarer Daten, insbesondere Bild- und/oder Videodaten, enthalten, die in ihrer zur Verfügung gestellten und/oder in einer gewandelten Form im Rahmen der Abbildungs-Segmentierungs-Routine ausgewertet werden. Die Abbildungs-Segmentierungs-Routine weist zur Auswertung eine Mehrzahl an Schichten mit einer Vielzahl von miteinander verbundenen virtuellen Knotenelementen auf. Die Daten des Datensatzes durchlaufen zumindest einmal von einer ersten Schicht bis zu einer letzten Schicht über den Verbund der Knotenelemente die Abbildungs-Segmentierungs-Routine, werden von den Knotenelementen über individuelle Gewichtungsfunktionen manipuliert, an zumindest ein, insbesondere mehrere, Schaltelemente weitergeleitet und innerhalb der Schichten zu neuen Datensätzen zusammengeführt. Die in der letzten Schicht der Abbildungs-Segmentierungs-Routine entstandenen neuen Datensätze weisen zumindest ein abbildungscharakteristisches Merkmal auf.

Insbesondere ist die Abbildungs-Segmentierungs-Routine zum Erkennen und/oder Identifizieren von Abbildungs-Segmenten ausgebildet. Das Erkennen der Abbildungs-Segmente durch die Abbildungs-Segmentierungs-Routine kann mittels Trainingsbildern trainiert werden.

Der Status bzw. der Fortschritt der Abbildungs-Segmentierungs-Routine bei der Ermittlung charakteristischer Abbildungs-Segmente aus der digitalen Abbildung wird durch die Auswertungseinheit erfasst und kann in Form einer Auswertungsinformation an die Steuereinheit ausgegeben werden.

Die Auswertungseinheit erfasst weiterhin die durch die Abbildungs-Segmentierungs-Routine ermittelten charakteristischen Abbildungs-Segmente.

Alternativ oder zusätzliche kann vorgesehen sein, dass die Auswertungseinheit alle durch die Abbildungs-Segmentierungs-Routine ermittelten Abbildungs-Segmente erfasst.

Das erfindungsgemäße Verfahren weist die Möglichkeit auf, eine Auswertung des grafischen Ausgangs einer zu testenden Software einer grafischen Benutzerschnittstelle vorzunehmen, ohne dabei in den Software-Code der zu testenden Software selbst einzugreifen. Dies wird ermöglicht, indem die durch die grafische Ausgabe der grafischen Benutzerschnittstelle erzeugte digitale Abbildung von der grafischen Benutzerschnittstelle zumindest auch an die Auswertungseinheit übermittelt wird. Die Auswertungseinheit ermittelt autonom durch Ausführen einer Abbildungs-Segmentierungs-Routine die grafischen Bestandteile bzw. die charakteristischen Abbildungs-Segmente aus der digitalen Abbildung und übermittelt diese an die Steuereinheit. Die Steuereinheit stellt fest, ob alle charakteristischen Abbildungs-Segmente in der momentanen Abbildung des grafischen Ausgangs der grafischen Benutzerschnittstelle vorhanden sind und setzt den Softwaretest entsprechend der Feststellung fort. Mithin kann der Softwaretest der grafischen Benutzerschnittstelle vollständig automatisch durchgeführt werden.

### Bevorzugte Weiterbildungen des erfindungsgemäßen Verfahrens

In einer bevorzugten Weiterbildung des erfindungsgemäßen Verfahrens ist vorgesehen, dass die digitale Abbildung von einem Grafikprozessor der Benutzerschnittstelle bereitgestellt wird. Als grafische Ausgabe dient hier also der Grafikprozessor.

Alternativ oder zusätzlich kann vorgesehen sein, dass die digitale Abbildung durch eine fototechnische Apparatur, insbesondere durch eine Kamera, besonders bevorzugt durch eine IP-Kamera (Netzwerkkamera), bereitgestellt wird, die die grafische Abbildung der grafischen Benutzerschnittstelle erfasst. Mit anderen Worten erfolgt die Bereitstellung der digitalen Abbildung auf Grundlage der durch die Anzeige abgebildeten grafischen Abbildung der grafischen Benutzerschnittstelle. Die digitale Abbildung wird durch die fototechnische Apparatur an die Auswertungseinheit übermittelt. Die Auswertungseinheit kann die fototechnische Apparatur aufweisen.

Bei einer besonders bevorzugten Weiterbildung des Verfahrens wird die bereitgestellte digitale Abbildung von der grafischen Benutzerschnittstelle, insbesondere dem Kommunikationsmodul der Recheneinheit, an die Auswertungseinheit übermittelt.
Die Übermittlung der digitalen Abbildung von der grafischen Benutzerschnittstelle an die Auswertungseinheit erfolgt insbesondere unmittelbar. Alternativ kann vorgesehen sein, dass die digitale Abbildung durch die Steuereinheit empfangen und von dieser an die Auswertungseinheit weitergegeben wird. Letzteres ist insbesondere von Vorteil, wenn der unmittelbare Kommunikationsweg zwischen grafischer Benutzerschnittstelle und der Auswertungseinheit nicht möglich ist.

Insbesondere kann vorgesehen sein, dass das Übermitteln der digitalen Abbildung mittels eines Fernzugriffs, insbesondere über ein Remote-Desktop-Protocol, erfolgt. Unter einem Fernzugriff ist im Rahmen der Erfindung die Kommunikation, d.h. sowohl der Empfang als auch die Übermittlung von Daten, zwischen Programmen zweier Geräte zu verstehen. Mit anderen Worten erfolgt bei dieser Verfahrensvariante die Fernzugriffssteuerung nicht über die Ein- und Ausgabemittel des Gerätes, auf das zugegriffen wird.

Die Kommunikation kann dabei kabellos und/oder kabelgebunden unmittelbar zwischen den Geräten und/oder über eines oder mehrere Zwischengeräte erfolgen.

Der Fernzugriff kann mittels verschiedener Kommunikationsprotokolle erfolgen. Ein Fernzugriff über eine Remote-Desktop-Protocol (RDP) ist hinsichtlich der Übermittlung von Daten, insbesondere von digitalen Abbildungen, besonders geeignet. Darüber hinaus sind jedoch auch weitere Fernzugriffsmöglichkeiten denkbar. Beispielsweise, jedoch nicht abschließend sind RFB (VNC), SPICE und X Forwarding genannt.

Weiterhin bevorzugt ist eine Weiterbildung des Verfahrens, bei der die digitale Abbildung und die zugehörigen ermittelten charakteristischen Abbildungs-Segmente zur Weiterentwicklung der Abbildungs-Segmentierungs-Routine gespeichert werden. Eine Weiterentwicklung der Abbildungs-Segmentierungs-Routine erfolgt durch Vorgabe von digitalen Abbildungen sowie den aus der digitalen Abbildung ermittelbaren Abbildungs-Segmenten.

Eine besonders bevorzugte Weiterbildung sieht vor, dass der Auswertungseinheit Auswertungsanweisungen bezüglich der zu ermittelnden charakteristischen Abbildungs-Segmente, insbesondere Referenz-Abbildungs-Segmente, zur Verfügung gestellt werden und dass die Auswertungseinheit Auswertungsinformationen über die ermittelten charakteristischen Abbildungs-Segmente an die Steuereinheit übermittelt.

Die Auswertungsanweisungen umfassen vorzugsweise wenigstens eine Angabe, durch die die Ermittlung von charakteristischen Abbildungs-Segmenten durch die Abbildungs-Segmentierungs-Routine beschleunigt wird.

Die Auswertungsanweisen können sich beispielsweise auf den Informationsgehalt der zu ermittelnden charakteristischen Abbildungs-Segmente beziehen. In diesem Fall kann die Auswertungsanweisung beispielsweise dazu führen, dass die Abbildungs-Segmentierungs-Routine lediglich einen bestimmten Informationsgehalt berücksichtig und/oder einen bestimmten Informationsgehalt von der Ermittlung ausschließt.

Ebenso kann vorgesehen sein, dass eine Auswertungsanweisung beispielsweise den Grad der Übereinstimmung zwischen einem erwarteten charakteristischen Abbildungs-Segment und einem Referenz-Abbildungs-Segment und/oder in Form eines Gattungsbegriffs des charakteristischen Abbildungs-Segments aufweist. Mit anderen Worten kann eine Auswertungsanweisung neben einem Referenz-Abbildungs-Segment ein weiteres Kriterium, beispielsweise den Grad der Übereinstimmung zwischen charakteristischem Abbildungs-Segment und dem auftretenden Abbildungs-Segment in der digitalen Abbildung enthalten.

Alternativ oder zusätzlich kann sich eine Auswertungsanweisung auf einen bestimmten Bereich der in der digitalen Abbildung beziehen und dazu führen, dass die Abbildungs-Segmentierungs-Routine lediglich einen Teilbereich der digitalen Abbildung für die Ermittlung von charakteristischen Abbildungs-Segmenten berücksichtigt.

Besonders vorteilhaft ist die Angabe eines Referenz-Abbildungs-Segments in einer Auswertungsanweisung, da durch einen Abgleich der digitalen Abbildung mit dem Referenz-Abbildungs-Segment die charakteristischen Abbildungs-Segmente besonders schnell ermittelt werden können.

Die Auswertungsanweisung könnte zusätzlich zu einem Referenz-Abbildungs-Segment weitere Angaben enthalten, die sich beispielsweise auf den Grad der Übereinstimmung des Informationsgehalts zwischen Referenz-Abbildungs-Segment und zu ermittelndem charakteristischen Abbildungs-Segment beziehen.

Gemäß der Weiterbildung des Verfahrens ist vorgesehen, dass die Auswertungseinheit Auswertungsinformationen über die charakteristischen Abbildungs-Segmente an die Steuereinheit übermittelt.

Die Auswertungsinformationen enthalten dabei Angaben über bzw. zu den ermittelten charakteristischen Abbildungs-Segmenten. Dies kann das charakteristische Abbildungs-Segment selbst, eine Beschreibung des charakteristischen Abbildungs-Segments und/oder eine Information über den Grad der Übereinstimmung zwischen dem ermittelten charakteristischen Abbildungs-Segment und einer zur Verfügung gestellten Referenz-Abbildung beinhalten. Denkbar ist ebenso, dass die Auswertungsinformation lediglich aus einem positiven oder negativen Bericht über den Fund des zu ermittelnden charakteristischen Abbildungs-Segments besteht.

Die Auswertungsinformation kann gebündelt nach der Ermittlung durch die Abbildungs-Segmentierungs-Routine und/oder unmittelbar nach Auffinden eines charakteristischen und/oder nicht-charakteristischen Abbildungs-Segments an die Steuereinheit übermittelt werden.

Insbesondere kann vorgesehen sein, dass die Auswertungsinformationen nur dann übermittelt werden, wenn die Auswertungseinheit zumindest ein charakteristisches Abbildungs-Segment ermittelt hat, das die Auswertungsanweisungen erfüllt, insbesondere einem der zur Verfügung gestellten Referenz-Abbildungs-Segmente entspricht. Die Auswertungseinheit erhält die Referenz-Abbildungs-Segmente vorzugsweise von der Steuereinheit. Generell können jedoch auch Referenz-Abbildungs-Segmente bereits in der Auswertungseinheit hinterlegt sein. Die Auswertungseinheit kann dann einerseits gezielt nach den Referenz-Abbildungs-Segmenten suchen. Andererseits kann die Steuereinheit schneller ermitteln, ob der gewünschte Testzustand vorliegt.

Eine besonders bevorzugte Weiterbildung sieht vor, dass die Abbildungs-Segmentierungs-Routine nur die charakteristischen Abbildungs-Segmente bestimmt, die den zugrundeliegenden Referenz-Abbildungs-Segmenten entsprechen.

Weiterhin bevorzugt ist eine Weiterbildung des Verfahrens, bei der die Auswertungsinformationen nur dann an die Steuereinheit übermittelt werden, wenn die Auswertungseinheit eine Änderung der übermittelten digitalen Abbildung festgestellt hat. Eine Änderung der digitalen Abbildung kann insbesondere durch die Anzahl, das Auftreten oder Nicht-Auftreten und/oder die Art, beispielsweise der Größe, der Gestalt, der Farbe usw. der enthaltenen charakteristischen Abbildungs-Segmente festgestellt werden.

Bei einer besonders bevorzugten Variante des erfindungsgemäßen Verfahrens werden zumindest zwei, insbesondere zumindest vier, besonders bevorzugt zumindest zehn, Softwaretests zumindest zeitweise parallel durchgeführt. Dies ermöglicht das zeitgleiche Testen verschiedener voneinander unabhängigen Softwareumfängen bzw. Softwarefunktionalitäten der grafischen Benutzerschnittstelle.

### Erfindungsgemäße Vorrichtung

Die der Erfindung zugrundeliegende Aufgabe wird weiterhin gelöst durch ein Softwaretestsystem zur Ausführung eines Verfahrens zur Durchführung von Softwaretests mit einer zu testenden grafischen Benutzerschnittstelle, einer Auswertungseinheit und einer Steuereinheit zur automatisierten Testdurchführung, wobei die grafische Benutzerschnittstelle zum Empfang von Steueranweisungen ausgebildet ist, die Auswertungseinheit zum Empfangen und Analysieren einer digitalen Abbildung und zur Kommunikation mit der Steuereinheit ausgebildet ist, und die Steuereinheit zur Übermittlung von Steueranweisungen an die grafische Benutzerschnittstelle ausgebildet ist, dadurch gekennzeichnet, dass die Auswertungseinheit eine Abbildungs-Segmentierungs-Routine aufweist.

Die grafische Benutzerschnittstelle weist eine Recheneinheit und vorzugsweise eine optische, bzw. grafische Anzeige auf. Die Recheneinheit weist einen Speicher für eine Betriebssoftware der grafischen Benutzerschnittstelle, einen Prozessor, eine grafische Ausgabe und ein Kommunikationsmodul auf. Die grafische Ausgabe der Recheneinheit kann durch den Prozessor der Recheneinheit und/oder durch einen separaten Grafikprozessor erfolgen. Ein Grafikprozessor kann als integrierter Grafikprozessor oder dedizierter Grafikprozessor ausgebildet sein. Ein integrierter Grafikprozessor kann beispielsweise als Chipset auf der Hauptplatine (Onboard-Grafikkarte), auf einem separaten Die innerhalb desselben Chipgehäuses wie der Prozessor und/oder unmittelbar auf dem Die des Prozessors und zusammen mit diesem angeordnet oder ausgebildet sein. Ein dedizierter Grafikprozessor kann beispielsweise als Erweiterungskarte mit der Hauptplatine verbunden sein und/oder als Chipsatz auf der Hauptplatine angeordnet und/oder ausgebildet sein.

Ebenso kann die Recheneinheit mehrere, insbesondere zumindest zwei, besonders bevorzugt zumindest drei, grafische Ausgaben aufweisen. Die grafischen Ausgaben können voneinander abweichende, insbesondere verschiedene, digitale Abbildungen bereitstellen. Die Bereitstellung kann über mehrere separate Kommunikationsmodule und/oder über dasselbe Kommunikationsmodul erfolgen.

### Bevorzugte Ausführungsformen der erfindungsgemäßen Vorrichtung

In einer bevorzugten Ausführungsform des erfindungsgemäßen Softwaretestsystems ist vorgesehen, dass die grafische Benutzerschnittstelle zur Bereitstellung einer digitalen Abbildung einer grafischen Ausgabe einer Recheneinheit der grafischen Benutzerschnittstelle ausgebildet ist.

Alternativ oder zusätzlich kann vorgesehen sein, dass das Softwaretestsystem eine fototechnische Apparatur, insbesondere eine Kamera, besonders bevorzugt eine IP-Kamera (Netzwerkkamera), aufweist und die digitale Abbildung durch die fototechnische Apparatur bereitgestellt wird.

Eine bevorzugte Ausführungsform des erfindungsgemäßen Softwaretestsystems sieht vor, dass die Steuereinheit zum Steuern der grafischen Benutzerschnittstelle, insbesondere über einen Fernzugriff, besonders bevorzugt über ein Remote-Desktop-Protocol, ausgebildet ist. Darüber hinaus sind weiter Kommunikationsprotokolle zwischen den Komponenten des Softwaretestsystems denkbar. Beispielsweise, jedoch nicht abschließend sind RFB (VNC), SPICE und X Forwarding genannt.

Weiterhin bevorzugt ist eine Ausführungsform, bei der die Steuereinheit zur Übermittlung von Auswertungsanweisungen an die Auswertungseinheit ausgebildet ist.

In einer bevorzugten Ausführungsform des Softwaretestsystems sind die grafische Benutzerschnittstelle und/oder die Auswertungseinheit und/oder die Steuereinheit örtlich voneinander entfernt. Die örtliche Entfernung zwischen der grafischen Benutzerschnittstelle und/oder der Auswertungseinheit und/oder der Steuereinheit beträgt zumindest 50 Meter, insbesondere zumindest 500 Meter, besonders bevorzugt zumindest 500 Kilometer.

Weiterhin bevorzugt ist eine Ausführungsform, bei der die Auswertungseinheit dazu ausgebildet ist die charakteristischen Abbildungs-Segmente aus einer digitalen Abbildung in Form von Bilddaten, Videodaten und/oder Streamdaten zu bestimmen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine Ausführungsform des erfindungsgemäßen Softwaretestsystems sowie eine erste Variante des erfindungsgemäßen Verfahrens, bei dem die Auswertungseinheit die grafische Abbildung ohne Vorgabe von Referenz-Abbildungs-Segmenten analysiert.
- Fig. 2: zeigt das erfindungsgemäße Softwaretestsystem sowie eine zweite Variante des erfindungsgemäßen Verfahrens, bei dem die Auswertungseinheit die grafische Abbildung gemäß einer Vorgabe von Referenz-Abbildungs-Segmenten analysiert.

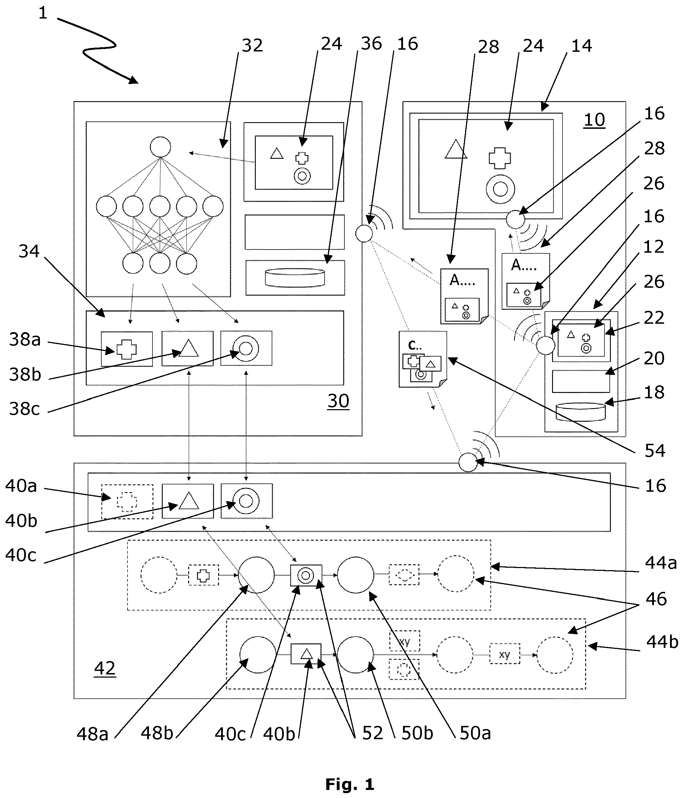

**Fig. 1** zeigt eine grafische Benutzerschnittstelle **10**, mit einer Recheneinheit **12** und einer Anzeige **14.** Die Anzeige 14 ist gemäß der Ausführungsform der Fig. 1 beispielhaft als Touchscreen ausgebildet und weist ein berührungsempfindliches Eingabemittel für die Bedienung der grafischen Benutzerschnittstelle 10 auf. Die Anzeige 14 ist über eine Kommunikationsverbindung - in diesem Fall eine drahtlose Verbindung - mit der Recheneinheit 12 verbunden. Je nach Ausführungsform kann die grafische Benutzerschnittstelle 10 mehrere Anzeigen 14 aufweisen. Die Anzeige 14 kann darüber hinaus auch kabelgebunden mit der Recheneinheit 12 verbunden sein. Sowohl die Anzeige 14 als auch die Recheneinheit 12 weisen zur Kommunikation miteinander Kommunikationsmodule **16** auf.

Die Recheneinheit 12 weist einen Speicher **18**, einen Prozessor **20**, einen grafischen Ausgang in Form eines Grafikprozessors **22** und das Kommunikationsmodul 16 auf. Der Speicher 18 dient dem Speichern von Daten und Software für den Betrieb der grafischen Benutzerschnittstelle 10. Der Prozessor 20 ermöglicht das Ausführen der Betriebssoftware der grafischen Benutzerschnittstelle 10, verarbeitet Eingaben - beispielsweise eines Nutzers über den Touchscreen - und steuert die Ausgabe von Informationen. Das Tätigen von Eingaben an die grafische Benutzerschnittstelle 10 kann dabei selbstverständlich auch über andere Eingabemittel, beispielsweise eine Tastatur und/oder eine Maus (nicht gezeigt) erfolgen.

Zur Ausgabe einer grafischen Abbildung **24** auf der Anzeige 14 werden vom Prozessor 20 berechneten und bereitgestellte Ausgabeinformationen vom Grafikprozessor 22 weiterverarbeitet. Der Grafikprozessor 22 ist gemäß der Fig. 1 als dedizierte Grafikkarte ausgebildet. Generell kann der Grafikprozessor 22 jedoch auch andere Ausführungsformen eines Grafikprozessors aufweisen.

Der Grafikprozessor 22 wandelt die vom Prozessor 20 bereitgestellten Ausgabeinformationen in eine digitale Abbildung **26.** Die digitale Abbildung 26 weist dabei alle für die Erzeugung einer grafischen Abbildung 24 durch die Anzeige 14 benötigten Daten auf. Die digitale Abbildung 24 weist ein von der Anzeige 14 lesbares Datenformat auf.

Um eine effiziente und störungsfreie Übertragung der digitalen Abbildung 26 an die Anzeige 14 zu ermöglichen, ist gemäß der Ausführungsform vorgesehen, dass das Kommunikationsmodul 16 der Recheneinheit 12 die digitale Abbildung 26 in ein Übertragungsformat **28** wandelt. Die Anzeige 14 ist dabei in der Lage das empfangene Übertragungsformat 28 zu decodieren, die digitale Abbildung 26 zu entnehmen und eine grafische Abbildung 24 auszugeben. Generell ist jedoch ebenso denkbar, die Anzeige 14 unmittelbar, kabellos oder kabelgebunden, mit dem Grafikprozessor 22 zu verbinden.

Eine Auswertungseinheit **30** weist ein Kommunikationsmodul 16 zum Empfang der digitalen Abbildung 26 in einem Übertragungsformat 28, eine Abbildungs-Segmentierungs-Routine **32**, ein Ergebnismodul **34** und einen Abbildungs-Speicher **36** auf.

Die Auswertungseinheit 30 ist dazu ausgebildet, die von der Recheneinheit 12 an die Anzeige 14 übermittelten digitalen Abbildung 26 zu empfangen. Hierfür wird die digitale Abbildung 26 von der Recheneinheit 12, insbesondere dem Kommunikationsmodul 16, vorzugsweise direkt an die Auswertungseinheit 30 gesendet. Die von der Auswertungseinheit 30 empfangene digitale Abbildung 26 ist dabei eine zumindest ähnliche, insbesondere identische, Kopie der digitalen Abbildung 26, die an die Anzeige 14 übermittelt wird. Eine ähnliche Kopie kann beispielsweise in Bezug auf die Bildqualität und/oder die Bildabmessungen von der originalen Abbildung abweichen. Alternativ kann vorgesehen sein, dass die Auswertungseinheit 30 die Kommunikation zwischen der Anzeige 14 und der Recheneinheit 12 mitverfolgt und dem Datenverkehr übermittelte digitale Abbildungen 26 automatisch entnimmt. Die digitale Abbildung 26 kann auch in dem Fall an die Auswertungseinheit 30 übermittelt werden, wenn keine Anzeige 14 mit der Recheneinheit 12 verbunden ist.

Die Auswertungseinheit 30 entnimmt dem Übertragungsformat 28 die digitale Abbildung 26.

Die digitale Abbildung 26 wird durch die Auswertungseinheit 30 in eine grafische Abbildung 24 gewandelt und mit einer Abbildungs-Segmentierungs-Routine 32 analysiert, indem in der grafischen Abbildung 24 zu ermittelnde Abbildungs-Segmenten **38a-c** identifiziert werden. Die während der Ermittlung durch die Abbildungs-Segmentierungs-Routine 32 identifizierten/ermittelten Abbildungs-Segmente 38a-c werden anschließend im Auswertungsmodul 34 der Auswertungseinheit 30 mit charakteristischen Abbildungs-Segmenten **40a-c** abgeglichen. Die charakteristischen Abbildungs-Segmente 40a-c werden durch eine Steuereinheit **42** bereitgestellt.

Die Steuereinheit 42 weist ein Kommunikationsmodul 16 zur Datenübermittlung zu der grafischen Benutzerschnittstelle 10, insbesondere zu der Recheneinheit 12 der grafischen Benutzerschnittstelle 10, und zum Datenaustausch mit der Auswertungseinheit 30 auf.

Die Steuereinheit 42 koordiniert bzw. steuert gemäß der gezeigten Ausführungsform die Testabläufe zweier vordefinierter Softwaretests **44a, 44b,** die in den Figuren zum besseren Verständnis schematisch abgebildet sind. Die Softwaretests 44a, 44b laufen vorzugsweise abschnittsweise parallel bzw. gleichzeitig ab. Beide Softwaretests 44a, 44b weisen jeweils im gezeigten Beispiel vier Testzustände **46** auf (Aus Übersichtlichkeitsgründen sind lediglich die jeweils letzten Testzustände 46 eines jeden Softwaretests 44a, 44b mit einem Bezugszeichen versehen). Beide Softwaretests 44a, 44b weisen einen aktuellen Testzustand **48a, 48b** und einen auf den aktuellen Testzustand 48a, 48b unmittelbar folgenden nachfolgenden Testzustand **50a, 50b** auf. Der Softwaretest 44a befindet sich in einem fortgeschrittenen Teststadium im zweiten Testzustand 46, der Softwaretest 44b am Testbeginn in einem ersten Testzustand 46.

Die Softwaretests 44a, 44b beziehen sich im vorliegenden Ausführungsbeispiel auf dieselbe Software der grafischen Benutzerschnittstelle 10 unter Auswertung der digitalen Abbildung 26 eines Grafikprozessors 22 der Recheneinheit 12. Ebenso ist jedoch denkbar, dass sich die Softwaretests 44a, 44b auf verschiedene digitale Abbildungen 26 aus verschiedenen grafischen Ausgaben, insbesondere Grafikprozessoren 22, der Recheneinheit 10 beziehen. Weiterhin ist vorstellbar, dass die grafische Benutzerschnittstelle 10 mehrere Recheneinheiten 12 mit jeweils zumindest einer grafischen Ausgabe aufweist und sich die Softwaretests 44a, 44b die digitalen Abbildungen 26 verschiedener grafischer Ausgaben der verschiedenen Recheneinheiten 12 beziehen. In diesen Fällen kann die Auswertungseinheit 32 zum Empfang von mehreren digitalen Abbildungen 26 von mehreren Recheneinheiten 12 ausgebildet sein.

Die Softwaretests 44a, 44b weisen Bedingungen **52** für Zustandsänderungen von einem Testzustand 46 in einen folgenden Testzustand 46 in Form charakteristischer Abbildungs-Segmente auf (Aus Gründen der Übersichtlichkeit sind lediglich zwei Bedingungen 52 mit einem Bezugszeichen versehen).Die Bedingungen 52 für eine Zustandsänderung von den aktuellen Testzuständen 48a, 48b in die nachfolgenden Testzustände 50a, 50b sind die charakteristischen Abbildungs-Segmente 40b (Dreieck) für den ersten Softwaretest 44a und 40c (Kringel) für den zweiten Softwaretest 44b.

Die den Bedingungen 52 der Softwaretests 44a, 44b entsprechenden charakteristischen Abbildungs-Segmente 40b und 40c sind im abgebildeten Teststadium gemäß Fig.1 durch die Abbildungs-Segmentierungs-Routine 32 aus der digitalen Abbildung 26 ermittelt worden. Hierfür wurden zunächst die Abbildungs-Segmente 38a-c aus der digitalen Abbildung 26 bzw. der grafischen Abbildung 24 ermittelt und in Form einer Auswertungsinformation **54** an die Steuereinheit 42 übermittelt. Die Steuereinheit 42 überprüft bei Eingang der Auswertungsinformation 54 die Abbildungs-Segmente 38a-c hinsichtlich erwarteter charakteristische Abbildungs-Segmente 40b und 40c. Im abgebildeten Teststadium wurden alle charakteristischen Abbildungs-Segmente 40b und 40c der jeweiligen Softwaretests 44a und 44b durch die Abbildungs-Segmentierungs-Routine 32 ermittelt. Die Steuereinheit 42 versetzt die Softwaretests 44a, 44b daher in die nachfolgenden Testzustände 50a, 50b.

Statt der Ermittlung aller in der Abbildung 24 vorhandenen Abbildungs-Segmente können die zu ermittelnden charakteristischen Abbildungs-Segmente 40b, 40c zuvor an die Auswertungseinheit 30 übermittelt werden, so dass die Auswertungseinheit 30 lediglich einen Abgleich der zu ermittelnden charakteristischen Abbildungs-Segmente 40b und 40c vornimmt und der Steuereinheit 42 eine Information über das Ergebnis des Abgleichs übermittelt.

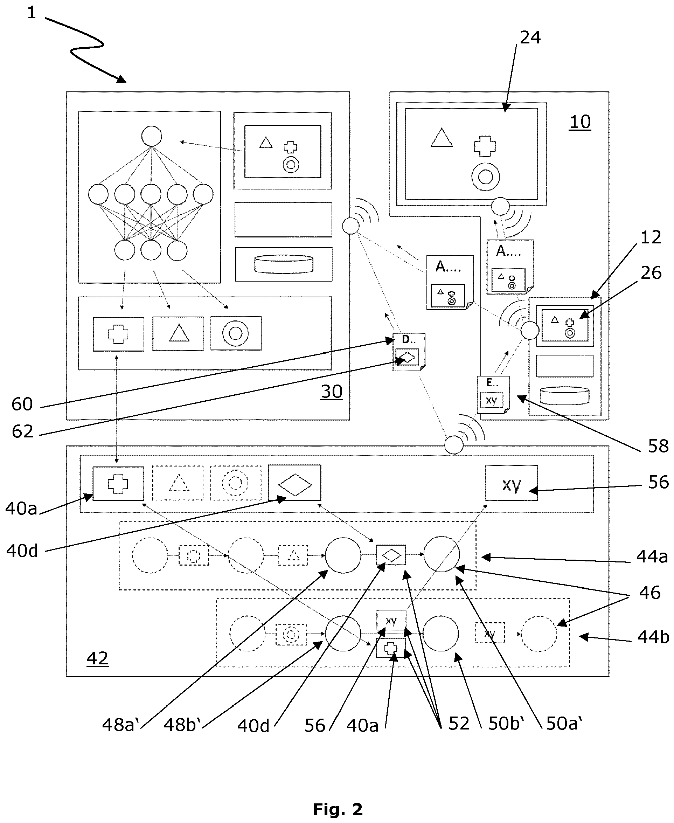

**Fig.2** erläutert eine weitere Ausführungsform des erfindungsgemäßen Verfahrens. Zwei Softwaretests 44a, 44b befinden sich jeweils in einem fortgeschrittenen Teststadium und weisen aktuelle Testzustände **48a', 48b'** sowie nachfolgende Testzustände **50a', 50b'** auf.
Um den Softwaretest 44b in den nachfolgenden Testzustand 50b' zu versetzten sind zwei Bedingungen zu erfüllen, nämlich das Ermitteln eines Abbildungs-Segments 40a (Kreuz) und das Vornehmen einer Eingabe **56.**
Die Steuereinheit 42 liest die durch die Softwaretests 44a, 44b vorgegebenen Bedingungen 52 in Form zweier charakteristischer Abbildungs-Segmente 40a (Kreuz) für den zweiten Softwaretest 44b, **40d** (Raute) für den ersten Softwaretest 44a ein. Zudem wird eine weitere Bedingung in Form einer Eingabe **56** (xy) für den zweiten Softwaretests 44b an die grafische Benutzerschnittstelle 10 zur weiteren Bearbeitung eingelesen.

Die Steuereinheit 42 übermittelt im Rahmen des zweiten Softwaretests 44b die Eingabe 56 in Form einer Steueranweisung **58** an die Recheneinheit 12 der grafischen Benutzerschnittstelle 10. Die Steueranweisung 58 kann nach Bearbeitung durch die Recheneinheit 12 zu einer Änderung der digitalen Abbildung 26 und der grafischen Abbildung 24 führen. In einem folgenden - nicht abgebildeten Verfahrensschritt - würde die Auswertungseinheit 30 die geänderte digitale Abbildung 26 analysieren.

Das charakteristische Abbildungs-Segment 40a (Kreuz) wurde bereits durch eine vorausgegangene Analyse der grafischen Abbildung 24 bzw. der digitalen Abbildung 26 ermittelt und an die Steuereinheit 42 übermittelt. Die Bedingungen 52 des Softwaretests 44b - Auffinden des charakteristischen Abbildungs-Segments 40a (Kreuz) sowie Tätigen der Eingabe 56 (xy) - sind somit erfüllt und die Steuereinheit 42 versetzt den Softwaretest 44b in den nachfolgenden Testzustand 50b'.

Das charakteristische Abbildungs-Segment 40d (Raute) wurde dagegen noch nicht durch die Auswertungseinheit 30 ermittelt. Die Steuereinheit 42 übermittelt im Rahmen des ersten Softwaretests 44a eine Auswertungsanweisung **60** in Form des zu ermittelnden charakteristischen Abbildungs-Segments 40d (Raute) an die Auswertungseinheit 30. Durch Vorgabe des Referenz-Abbildungs-Segments 62 kann die Ermittlung des charakteristischen Abbildungs-Segments 40d (Raute) in der grafischen Abbildung 24 durchgeführt, insbesondere erneut durchgeführt, und/oder beschleunigt werden. Gemäß der vorliegenden Ausführungsform weist die digitale Abbildung 26 das charakteristische Abbildungs-Segment 40d (Raute) jedoch nicht auf, weshalb die Bedingung 52 des Softwaretests 44a nicht erfüllt werden. Nach Ablauf eines für das Auffinden des charakteristischen Abbildungs-Segments 40d gegebenen Zeitraums wird daher die Bedingung "Zeitablauf" (nicht gezeigt) für eine Zustandsänderung des Softwaretests 44a in einen End-Testzustand (nicht gezeigt) mit dem Status "fehlgeschlagen" erfüllt. Die Steuereinheit 42 beendet den Softwaretest 44a entsprechend.

Eine Zustandsänderung der Softwaretests 44a, 44b erfolgt vorliegend unmittelbar bei Einritt der Bedingungen für beide Softwaretests 44a, 44b jeweils unabhängig voneinander. Darüber hinaus ist jedoch ebenso denkbar, dass die Steuereinheit 42 die Softwaretests 44a, 44b gemeinsam in die nächsten Testzustände 46 bzw. in die nachfolgenden Testzustände 50a', 50b' versetzt, wenn alle Bedingungen beider Softwaretests 44a, 44b erfüllt sind. Vorzugsweise verlaufen die Softwaretests 44a, 44b jedoch unabhängig voneinander.

Alle Testzustände 46 mit Ausnahme der jeweils letzten Testzustände 46 beider Softwaretests 44a, 44b, können bei Nicht-Auffinden der geforderten charakteristischer Abbildungs-Segmente 40a-d (Bedingungen) in einem vorgegebenen Zeitraum, eine Zustandsänderung in einen End-Testzustand mit Status "fehlgeschlagen" (nicht abgebildet) der betroffenen Softwaretests 44a, 44b führen.

### Literaturverzeichnis:

[1] Vergleich von Softwaretests zu grafischen Benutzerschnittstellen; Onlineplattform Wikipedia.org; "https://en.wikipedia.org/wiki/Comparison of GUI testing tools".

### Bezugszeichenliste

- 1: Softwaretestsystem;
- 10: grafische Benutzerschnittstelle;
- 12: Recheneinheit;
- 14: Anzeige;
- 16: Kommunikationsmodul;
- 18: Speicher;
- 20: Prozessor;
- 22: Grafikprozessor;
- 24; 24': grafische Abbildung;
- 26; 26': digitale Abbildung;
- 28; 28': Übertragungsformat;
- 30: Auswertungseinheit;
- 32: Abbildungs-Segmentierungs-Routine;
- 34: Ergebnismodul;
- 36: Abbildungs-Speicher;
- 38a-d: ermittelte Abbildungs-Segmente;
- 40a-d: charakteristische Abbildungs-Segmente;
- 42: Steuereinheit;
- 44a, 44b: Softwaretest;
- 46: Testzustand;
- 48a, 48b; 48a', 48b': aktueller Testzustand;
- 50a, 50b; 50a', 50b': nachfolgender Testzustand;
- 52: Bedingungen;
- 54, 54': Auswertungsinformation;
- 56: Eingabe;
- 58: Steueranweisung;
- 60: Auswertungsanweisung;
- 62: Referenz-Abbildungs-Segment.

## Patentansprüche

1. Verfahren zur Durchführung von Softwaretests (44a, 44b) für eine grafische Benutzerschnittstelle (10), wobei der Softwaretest (44a, 44b) einen aktuellen Testzustand (48a, 48b; 48a', 48b') und mindestens einen auf den aktuellen Testzustand folgenden nachfolgenden Testzustand (50a, 50b; 50a', 50b') umfasst und von einer Steuereinheit (42) gesteuert wird, mit den Verfahrensschritten:
A) Bereitstellen einer digitalen Abbildung (26; 26') einer grafischen Ausgabe einer Recheneinheit (12) der grafischen Benutzerschnittstelle (10) im aktuellen Testzustand (48a, 48b; 48a', 48b') des Softwaretests (44a, 44b);
B) Auswertung der bereitgestellten digitalen Abbildung (26; 26') durch Bestimmen charakteristischer Abbildungs-Segmente (44a-d) der digitalen Abbildung (26; 26') durch eine Auswertungseinheit (30);
C) Ändern des aktuellen Testzustands (48a, 48b; 48a', 48b') in den nachfolgenden Testzustand (50a, 50b; 50a', 50b') auf Grundlage der von der Auswertungseinheit (30) aus der digitalen Abbildung (26; 26') bestimmten charakteristischer Abbildungs-Segmente (44a-d);
**dadurch gekennzeichnet, dass**
der Softwaretest (44a, 44b) automatisiert durchgeführt wird und die charakteristischen Abbildungs-Segmente (44a-d) mittels einer Abbildungs-Segmentierungs-Routine (32) zur Bildklassifizierung bestimmt werden.

2. Verfahren nach Anspruch 1, **dadurch gekennzeichnet, dass** die digitale Abbildung (26; 26') von einem Grafikprozessor (22) der Benutzerschnittstelle (10) bereitgestellt wird.

3. Verfahren nach Anspruch 2, **dadurch gekennzeichnet, dass** die bereitgestellte digitale Abbildung (26; 26') von der grafischen Benutzerschnittstelle (10), insbesondere dem Kommunikationsmodul (16) der Recheneinheit (12), an die Auswertungseinheit (30) übermittelt wird.

4. Verfahren nach Anspruch 3, **dadurch gekennzeichnet, dass** das Übermitteln der digitalen Abbildung (26; 26') mittels eines Fernzugriffs, insbesondere über ein Remote-Desktop-Protocol, erfolgt.

5. Verfahren nach einem der vorhergehenden Ansprüche, **dadurch gekennzeichnet, dass** die digitale Abbildung (26; 26') und die zugehörigen ermittelten charakteristischen Abbildungs-Segmente (44a-d) zur Weiterentwicklung der Abbildungs-Segmentierungs-Routine (32) gespeichert werden.

6. Verfahren nach einem der vorhergehenden Ansprüche, **dadurch gekennzeichnet,**
**dass** der Auswertungseinheit (30) Auswertungsanweisungen (60) bezüglich der zu ermittelnden charakteristischen Abbildungs-Segmente (44a-d), insbesondere Referenz-Abbildungs-Segmente (62), zur Verfügung gestellt werden und
**dass** die Auswertungseinheit (30) Auswertungsinformationen (54; 54') über die ermittelten charakteristischen Abbildungs-Segmente (44a-d) an die Steuereinheit (42) übermittelt,

7. Verfahren nach Anspruch 6, **dadurch gekennzeichnet, dass** die Auswertungsinformationen (54; 54') nur dann übermittelt werden, wenn die Auswertungseinheit (30) zumindest ein charakteristisches Abbildungs-Segment (44a-d) ermittelt hat, das die Auswertungsanweisungen (60) erfüllt, insbesondere einem der zur Verfügung gestellten Referenz-Abbildungs-Segmente (62) entspricht.

8. Verfahren nach Anspruch 6 oder 7, **dadurch gekennzeichnet, dass** die Abbildungs-Segmentierungs-Routine (32) nur die charakteristischen Abbildungs-Segmente (44a-d) bestimmt, die den zugrundeliegenden Referenz-Abbildungs-Segmenten (62) entsprechen.

9. Verfahren nach einem der Ansprüche 6 bis 8, **dadurch gekennzeichnet, dass** die Auswertungsinformationen (54; 54') nur dann an die Steuereinheit (42) übermittelt werden, wenn die Auswertungseinheit (30) eine Änderung der digitalen Abbildung (26; 26'), insbesondere in der Anzahl, der Existenz und/oder der Art der enthaltenen charakteristischen Abbildungs-Segmente (44a-d), festgestellt hat.

10. Verfahren nach einem der vorhergehenden Ansprüche, **dadurch gekennzeichnet, dass** zumindest zwei Softwaretests (44a, 44b) zumindest zeitweise parallel durchgeführt werden.

11. Softwaretestsystem (1) zur Ausführung eines Verfahrens zur Durchführung von Softwaretests (44a, 44b), insbesondere nach einem der vorhergehenden Ansprüche, mit einer zu testenden grafischen Benutzerschnittstelle (10), einer Auswertungseinheit (30) und einer Steuereinheit (42) zur automatisierten Testdurchführung, wobei die grafische Benutzerschnittstelle (10) zum Empfang von Steueranweisungen (58) ausgebildet ist, die Auswertungseinheit (30) zum Empfangen und Analysieren einer digitalen Abbildung (26; 26') und zur Kommunikation mit der Steuereinheit (42) ausgebildet ist, und die Steuereinheit (42) zur Übermittlung der Steueranweisungen (58) an die grafische Benutzerschnittstelle (10) ausgebildet ist, **dadurch gekennzeichnet, dass** die Auswertungseinheit (30) eine Abbildungs-Segmentierungs-Routine (32) aufweist.

12. Softwaretestsystem nach Anspruch 11, **dadurch gekennzeichnet, dass** die Steuereinheit (42) zum Steuern der grafischen Benutzerschnittstelle (10), insbesondere über einen Fernzugriff, besonders bevorzugt über ein Remote-Desktop-Protocol, ausgebildet ist.

13. Softwaretestsystem nach einem der Ansprüche 11 oder 12, **dadurch gekennzeichnet, dass** die Steuereinheit (42) zur Übermittlung von Auswertungsanweisungen (60) an die Auswertungseinheit (30) ausgebildet ist.

14. Softwaretestsystem nach einem der Ansprüche 11 bis 13, **dadurch gekennzeichnet, dass** die grafische Benutzerschnittstelle (10) und/oder die Auswertungseinheit (30) und/oder die Steuereinheit (42) örtlich entfernt voneinander sind.

15. Softwaretestsystem nach einem der Ansprüche 11 bis 14, **dadurch gekennzeichnet, dass** die Auswertungseinheit (30) dazu ausgebildet ist die charakteristischen Abbildungs-Segmente (40a-d) aus einer digitalen Abbildung (26; 26') in Form von Bilddaten, Videodaten und/oder Streamdaten zu bestimmen.
